(19) **Europäisches Patentamt / European Patent Office / Office européen des brevets**

(11) **EP 4 223 828 A1**

(12) **EUROPEAN PATENT APPLICATION**

(43) Date of publication:
**09.08.2023 Bulletin 2023/32**

(21) Application number: **22154749.0**

(22) Date of filing: **02.02.2022**

(51) International Patent Classification (IPC):
**C08J 3/12** (2006.01)

(52) Cooperative Patent Classification (CPC):
**C08J 3/12; B29B 9/08; B29B 9/10; B29B 9/12;
C08J 3/128; C08J 3/14; B29B 2009/125;
C08J 2367/02**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SHPP Global Technologies B.V.
4612 PX Bergen op Zoom (NL)**

(72) Inventors:
• **Bajaj, Devendra Narayandas
  Bergen op Zoom (NL)**
• **Kalyanaraman, Viswanathan
  Bergen op Zoom (NL)**

(74) Representative: **Balder IP Law, S.L.
Paseo de la Castellana 93
5ª planta
28046 Madrid (ES)**

(54) **PBT-ALUMINA COMPOSITE PARTICLES, METHODS, AND MOLDED PARTS**

(57) Polymer-ceramic composite particles, molded parts, and methods. The composites, in powder form, comprise a plurality of composite particles each comprising an agglomeration of polybutylene terephthalate (PBT) particle physically bonded to a plurality of aluminum oxide ($Al_2O_3$) particles, where at least some of the $Al_2O_3$ particles are exposed to an exterior of the agglomeration of PBT particles. Such composite powders comprises between 50% and 90% by volume of $Al_2O_3$, and between 10% and 50% by volume of PBT. In pellet form, PBT particles of adjacent composite particles are joined to resist separation of the adjacent composite particles and deformation of a respective pellet. Methods of forming a ceramic-polymer composite comprise: heating a mixture of PBT particles, organic solvent, and $Al_2O_3$ particles to a first temperature that is between the glass transition temperature and the melting point of the PBT, while maintaining the mixture at a first pressure at which the solvent remains substantially liquid, to at least partially dissolve the PBT particles in the solvent; agitating the heated mixture for a period of minutes; and cooling the mixture to or below the glass transition temperature of the PBT to precipitate at least some of the PBT to form agglomerations of PBT particles and bond at least some of the $Al_2O_3$ particles to to PBT particles to thereby form a plurality of composite particles each comprising an agglomeration of PBT particles physically bonded to a plurality of $Al_2O_3$ particles, at least some of which being exposed to an exterior of the agglomeration.

**EP 4 223 828 A1**

**Description**

**FIELD OF INVENTION**

This disclosure relates generally to ceramic-thermoplastic composites and more particularly, but not by way of limitation, to PBT-Alumina composite particle powders and related processes and articles.

**BACKGROUND**

There are currently a limited number of ceramic-polymer composites with a high proportion of ceramic. Known ceramic-polymer composites typically contain significantly less than 50% by volume of ceramic, and significantly more than 50% by volume of polymer.

A first category of such ceramic-polymer composites relies on a thermoset approach in which a monomer is combined with the porous ceramic structure and cured to form a composite. But this approach generally requires undesirably-long curing times, and density of a final part is generally dependent on the size of pores in the ceramic and the viscosity of the resin.

A second category of such ceramic-polymer composites relies on thermoplastic polymers, which generally do not require time to cure and can instead be simply heated to melt and subsequently cooled to solidity the thermoplastic polymer, thereby enabling relatively faster processing. Ceramic fillers have been compounded with thermoplastics to achieve certain properties, including stiffness and strength. However, the ceramic filler content in such thermoplastic polymers is typically limited to significantly less than 50% by volume due to limitations of conventional compounding technology. For example, in a traditional approach of this type, a ceramic filler is added to a polymer and the mixture is compounded in an extruder and palletized. Generally, the dispersion and distribution of the ceramic filler in the polymer matrix is highly dependent on the type of ceramic and polymer, other additives and coupling agents, rate of mixing, shear rate, temperature, and various other parameters. Due at least to these limitations, higher proportions of ceramics fillers e.g., greater than 50 % by volume) in a polymer matrix is challenging, and may for example damage the screws in an extruder (depending on the hardness of the ceramic) and degrade the polymer because of shear and heat.

A third category of such ceramic-polymer composites relies on the more-recently identified approach known as "cold sintering," various aspects of which may be described in U.S. Patent App. Pub. No. US 2017/0088471 and PCT Application Pub. Nos. (1) WO 2018/039620, (2) No. WO 2018/039628, (3) WO 2018/039619, and (4) WO 2018/039634. One drawback with cold sintering, however, is that not all ceramics can

be effectively cold sintered. For example, certain structural ceramics like Aluminum Oxide, Zirconia, Titanium Oxide, and Silicon Carbide generally cannot be cold sintered. Additionally, the structures produced by cold sintering typically utilize ceramic as the matrix and polymer as the filler, which generally results in differing structural properties and differing suitability for various end-use applications.

A fourth category of such ceramic-polymer composites can involve dissolving an amorphous polymer in a solvent, and mixing ceramic particles into the polymer-solvent mixture. For example, a sprouted-bed granulation process can be used to create polymercoated ceramic powders, such as described in Wolff, Composites Science and Technology 90 (2014) 154-159.

**SUMMARY**

This disclosure includes PBT-Alumina composite powders with large proportions (i.e., 50% or greater by volume) of Alumina in which individual PBT particles are bonded to Alumina particles and/or to other PBT particles, as well as methods of producing such composite powders and methods of molding composite parts from such composite powders. However, unlike prior polymer-ceramic composite powders, in which individual polymer particles were fully dissolved and/or melted in an effort to form a substantially continuous shell around a ceramic core, the present composite powders differ in that the individual PBT particles within the composite particles largely retain their individual nature and do not form a smooth or continuous shell around individual ceramic particles. The present composite powders also exhibit a high degree of homogeneity in the overall distribution of PBT particles and Alumina particles within the aggregate composite powder. As such, and unexpectedly, even in the absence of substantially continuous PBT shells surrounding Alumina particles, parts that are molded (e.g., via compression or injection molding) from the present composite powders will typically exhibit excellent mechanical properties (e.g., flexural modulus, flexural strength, flexural strain, relative density), and such mechanical properties will be substantially consistent across multiple parts molded from one of the present composite powders.

The present PBT-Alumina composite powders comprise: a plurality of composite particles, each of the composite particles comprising one or more aluminum oxide ($Al_2O_3$) particles and a plurality of polybutylene terephthalate (PBT) particles; where, for each of the composite particles, at least some of the PBT particles are physically bonded to the

Al$_2$O$_3$ particle(s) and any PBT particles not physically bonded to the Al$_2$O$_3$ particle(s) are each physically bonded to at least one other of the PBT particles. Such composite particles, and powders and pellets thereof, permit the molding of PBT-Alumina molded parts with high ceramic content by conventional processes such as compression molding and injection molding.

The present methods of forming PBT-Alumina composite particles permit the formation of powders of such composite particles in which the PBT and Alumina are distributed substantially homogenously within the powder.

Ultimately, the present methods permit the formation of powders of PBT-Alumina particles, in which the powder has a relatively large fraction of ceramic (e.g., greater than 50% by volume, between 50% and 90% by volume, between 50% and 70% by volume, and/or the like).

By way of example, such composite powders with higher proportions of structural ceramic (e.g., Al$_2$O$_3$) can be beneficial in structural components like gears, CE housings, protective shields, and the like because these types of applications typically benefit from properties such as wear resistance, hardness, scratch resistance, toughness, and stiffness. Additionally, the inclusion of ceramic particles in a polymer matrix can permit the adjustment and/or selection of properties like dielectric constant, dissipation factor, and RF transparency that can be beneficial for certain electronics applications.

Certain configurations of the present PBT-Alumina composite powders comprise: a plurality of composite particles, each of the composite particles comprising an agglomeration of polybutylene terephthalate (PBT) particle physically bonded to a plurality of aluminum oxide (Al$_2$O$_3$) particles, where at least some of the Al$_2$O$_3$ particles are exposed to an exterior of the agglomeration of PBT particles; and where the composite particles are in powder form. The present PBT-Alumina composite particles can comprise between 50% and 90% by volume of Alumina, and between 10% and 50% by volume of the PBT; and/or can have a Dv50 of from 1 micrometer ($\mu$m) to 200 $\mu$m (e.g., from 10 micrometers to 160 micrometers when unsieved, or from 10 micrometers to 30 micrometers when sieved through a 15 micrometer mesh). Typically, substantially all of the PBT is not cross-linked. In some such configurations, the alumina particles can have a particle size (e.g., diameter or minimum transverse dimension) of from 100 nanometers (nm) to 100 micrometers ($\mu$m); and/or can have a surface area of from 0.01 m$^2$/g to 20 m$^2$/g (e.g., from 0.01 m$^2$/g to 10 m$^2$/g, from 0.01 m$^2$/g to 2 m$^2$/g).

The present PBT-Alumina composite powders can also be pelletized (converted to pellet form) to facilitate transport, such as by limiting fines, and subsequent molding. Such PBT-Alumina material in pellet form can comprise:a plurality of solid pellets each comprising a plurality of the present composite particles, where the PBT particles of adjacent composite particles are physically bonded to resist separation of the adjacent composite particles and deformation of a respective pellet. As with the present composite powders; typically, substantially all of the PBT is not cross-linked.

In certain implementations of the present methods of forming a ceramic-polymer composite powder, the method comprises: mixing polybutylene terephthalate (PBT) particles, organic solvent, and aluminum oxide (Al$_2$O$_3$) particles; at least partially dissolving the PBT particles in the solvent by heating the mixture to a first temperature that is between the glass transition temperature and the melting point of the PBT, while maintaining the mixture at a first pressure at which the solvent remains substantially liquid; agitating the heated mixture for a period of minutes while maintaining the mixture at or above the first pressure and at or above the first temperature but below the melting point of the PBT; and cooling the mixture to or below a second temperature below the glass transition temperature of PBT to cause (a) at least some of the PBT to precipitate and form PBT particles, (b) at least some of the PBT particles to agglomerate, and (c) at least some of the Al$_2$O$_3$ particles to bond to PBT particles, to thereby form a plurality of composite particles each comprising an agglomeration of polybutylene terephthalate (PBT) particle physically bonded to a plurality of aluminum oxide (Al$_2$O$_3$) particles, where at least some of the Al$_2$O$_3$ particles are exposed to an exterior of the agglomeration of PBT particles.

In certain implementations of the present methods of molding a party from the present PBT-Alumina composite particles, the method comprises: subjecting, for a period of minutes, a volume of the present PBT-Alumina powders or of the present PBT-Alumina material in pellet form, to a first pressure while the powder is at a first temperature that is above the melting point of the PBT; where the powder substantially fills a working portion of a cavity of a mold. In some such methods, the first pressure is sufficient to form a molded part with a relative density greater than 90% (e.g., 97% or more) after the first pressure has been applied to the powder for a period of at least 30 minutes.

The terms "a" and "an" are defined as one or more unless this disclosure explicitly requires otherwise. The terms "substantially" and "about" are each defined as largely but not necessarily wholly what is specified (and includes what is specified; e.g., substantially 90 degrees includes 90 degrees), as understood by a person of ordinary skill in the art. In any disclosed embodiment, the term "substantially" or "about" may be substituted with "within [a percentage] of' what is specified, where the percentage includes .1, 1, 5, and 10 percent.

The phrase "and/or" means and *or.* To illustrate, A, B, and/or C includes: A alone, B alone, C alone, a combination of A and B, a combination of A and C, a combination of B and C, or a combination of A, B, and C. In other words, "and/or" operates as an inclusive or. The phrase "at least one of A and B" has the same meaning as "A, B, or A and B."

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

As used herein, a "size" or "diameter" of a particle refers to its equivalent diameter-referred to herein as its diameter-if the particle is modelled as a sphere. A sphere that models a particle can be, for example, a sphere that would have or produce a value measured for the particle, such as the particle's mass and/or volume, light scattered by the particle, or the like. Particles of the present dispersions can, but need not, be spherical.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

## BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.

FIG. 1A is a schematic illustration of one of the present composite particles comprising a ceramic particle and a plurality of polymer particles, in which the ceramic particle is larger than each of the polymer particles.

FIG. 1B is a schematic illustration of one of the present composite particles comprising an agglomeration of polymer particles and a plurality of ceramic particles, in which the agglomeration of polymer particles is larger than each of the ceramic particles.

FIG. 2 is a schematic illustration of the internal structure of a part molded from a dry powder of the present composite particles.

FIG. 3 is a flowchart of one example of a method of making a powder of the present composite particles.

FIG. 4 is a schematic illustration of stirring reactor of a type that can be used to make a powder of the present composite particles.

FIG. 5 is a flowchart of one example of a method of molding a part from a powder of the present composite particles.

FIG. 6 is a schematic illustration of a compression mold for molding a part.

FIGs. 7, 8, and 9 are scanning electron microscope (SEM) images of examples of the present PBT-Alumina composite particles.

FIGs. 10, 11, and 12 are SEM images of examples of compression-molded composite parts made from examples of the present PBT-Alumina composite particles.

## DETAILED DESCRIPTION OF ILLUSTRATIVE EMBODIMENTS

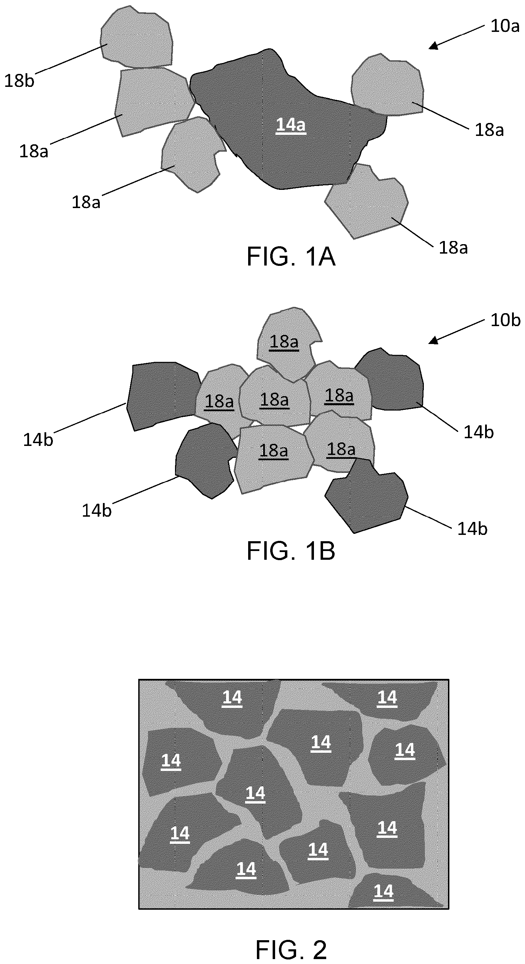

Referring now to the drawings, and more particularly to Figure 1A, a schematic illustration is shown of one example of the present composite particles 10a comprising a ceramic particle 14a and a plurality of polymer particles 18a, 18b. Ceramic particle 14 comprises aluminum oxide ($Al_2O_3$), and polymer particles 18a, 18b comprise polybutylene terephthalate (PBT). As shown, four polymer particles 18a are physically bonded to the ceramic particle 14a, and the remaining polymer particles 18b not physically bonded to the ceramic particle is physically bonded to one other of the polymer particles 18a. In this example, ceramic particle 14a is larger than (e.g., has a larger minimum or maximum transverse dimension than the respective minimum or maximum transverse dimensions of) the polymer particles 18a, 18b.

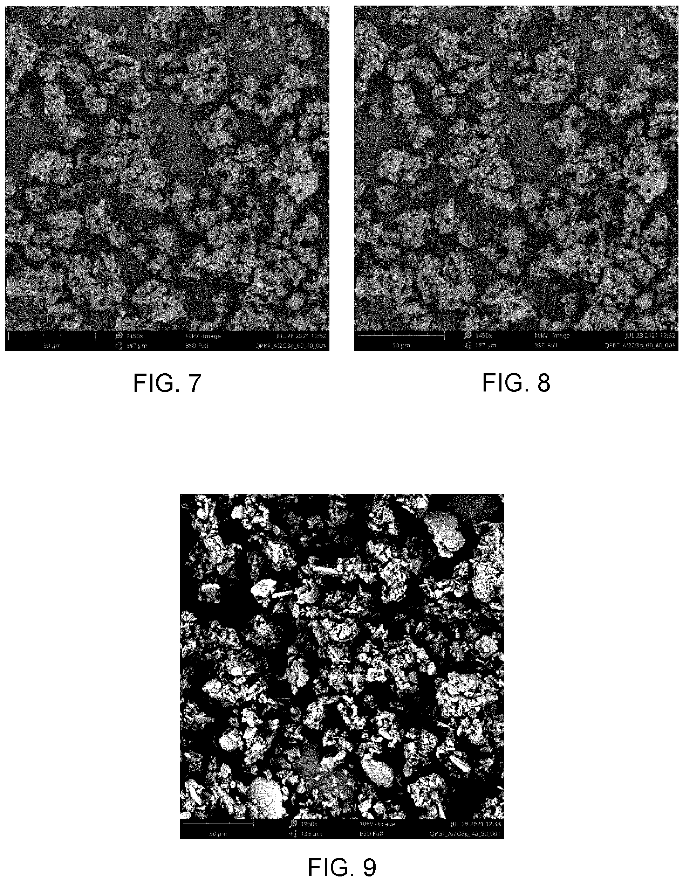

Figure 1B shows a schematic illustration another example of the present composite particles 10b comprising an agglomeration of polymers particle 18a and a plurality of ceramic particles 14a. As with particle 10a, ceramic particles 14b comprise aluminum oxide ($Al_2O_3$), and polymer particle 18 comprises polybutylene terephthalate (PBT). As shown, four ceramic particles 14b are physically bonded to the agglomeration of polymer particles 18a. In this example, individual ceramic particles 14b are comparable in size as the individual polymer particles 18a, but the individual ceramic particles 14b are smaller than (e.g., each have a smaller minimum or maximum transverse dimension than the respective minimum or maximum transverse dimension of) the agglomeration of polymer particles. In other embodiments, at least some of the individual ceramic particles can be larger than at least some of the individual polymer particles. As illustrated here (and also shown in Figures 7-9), at least some of the ceramic particles are exposed to an exterior of the agglomeration of polymer particles (e.g., not covered or substantially surrounded by the agglomeration of polymer particles. For example, two or more of a plurality of ceramic particles coupled to an agglomeration of polymer particles can be exposed to an exterior of the agglomeration. In some embodiments, the agglomeration of polymer particles can also enclose one or more ceramic particles.

As described in more detail below, the present methods permit the formation of a composite particles (e.g., 10a, 10b) in which the polymer particle(s) (e.g., 18, 18a, 18b) is/are not cross-linked.

In the present composite particles, the ceramic particle(s) (e.g., 14a, 14b) can have a particle size (e.g., diameter or minimum transverse dimension) of from 100 nanometers (nm) to 100 micrometers ($\mu$m). For example, the ceramic particles used to form the present composite particles (e.g., via the described methods) can have a Dv90 or Dv50 of between 100 nm and 100 $\mu$m (e.g., from 100 nm to 500 nm, from 100 nm to 400 nm, from 1 $\mu$m to 100 $\mu$m, from 1 $\mu$m to 50 $\mu$m, from 2 $\mu$m to 50 $\mu$m, from 3 $\mu$m to 20 $\mu$m, from 2 $\mu$m to 10 $\mu$m, from 3 $\mu$m to 10 $\mu$m, from 4 $\mu$m to 10 $\mu$m). Additionally or alternatively, the ceramic particles can have a surface area of from 0.01 $m^2$/g to 20 $m^2$/g (e.g., from 0.01 $m^2$/g to 10 $m^2$/g, from 0.01 $m^2$/g to 2 $m^2$/g).

The present composite particles (e.g., 10a, 10b) can have or be configured to have a particle size (e.g., diameter or minimum transverse dimension) of from 1 micrometer ($\mu$m) to 200 micrometers ($\mu$m). For example, the present composite particles can have a Dv90 or Dv50 of between 1 $\mu$m and 200 $\mu$m (e.g., from 1 $\mu$m to 50 $\mu$m, from 1 $\mu$m to 10 $\mu$m, from 100 $\mu$m to 200 $\mu$m, or from 125 $\mu$m to 175 $\mu$m).

The present powders comprise a plurality of particles (e.g., 10a, 10b), for example in a powder form. For example, a powder may be characterized by a polymer-solvent content (a solvent in which the polymer is dissolvable) of less than 3,000 parts per million (ppm) (e.g., less than 2,000 ppm, less than 1,000 ppm). However, in some configurations, the powder may mixed with and/or suspended in a liquid that is not a polymer-solvent (a liquid in which the polymer will not dissolve), such as water. In such configurations, the liquid may resist and/or prevent particles from becoming airborne or breathable, such as for transportation and handling of finer powders. In at least some configurations of the present powders, the powder is in a flowing form with a flowability *ffc* of at least 1 (e.g., from 1 to 8, from 1 to 6, from 1 to 4, from 2 to 4), in some configurations without flow promoters.

In some configurations of such powders, the composite particles in the aggregate comprise between 50% and 90% by volume of the ceramic (e.g., between 50% and 70% by volume of the ceramic).

FIG. 2 is a schematic illustration of the internal structure of a part molded from a dry powder of the present composite particles (e.g., 10a, 10b). As shown, the polymer particles (e.g., 18, 18a, 18b) of adjacent composite particles merge together to fill interstices between and bond together the ceramic particles to form a molded ceramic-polymer composite. As shown, the relatively higher proportion (e.g., 50% to 90% by volume) of ceramic in the powder means that a correspondingly higher proportion of the molded part is also ceramic. Further, the present composite particles, in which polymer particles are physically bonded to ceramic particles in multiple individual composite particles, prior to molding results in more-uniform distribution of polymer within the matrix of the molded part.

The present powders can also be pelletized or joined into a pellet form in which the polymer particles of adjacent composite particles are joined to resist separation of the adjacent composite particles and deformation of a respective pellet. For example, the present powders may be subjected to elevated temperatures and pressures in an extruder. Such temperatures may be at or near the glass transition temperature ($T_g$) of the polymer in the PBT-Alumina composite particles to render the PBT tacky but not liquefied, and such pressures (e.g., during extrusion) may be elevated relative to ambient, such that polymer particles of adjacent composite particles join sufficiently to resist separation but no so much that the independent boundaries/identities of adjacent polymer particles are lost. In such configurations, the pellet form may facilitate transportation of the composite particles (e.g., for distribution). Such pelletization can be achieved by any of various methods and processes that are known in the art, such as, for example, via a screw extruder.

### Polybutylene Terephthalate (PBT)

Polybutylene Terephthalate (PBT) is a semi-crystalline engineering thermoplastic material that is used, for example, as an electrical insulator. Various grades of PBT are commercially available, including, for example, VALOX™ Resin and VALOX™ FR Resin available from SABIC Innovative Plastics. IQ PBT or VALOX 195 particles from SABIC Thermoplastics were used for the present examples. In other implementations, other PBT grades can be used (e.g., IQ PBT or VALOX 315), or mixtures of different PBT grades (e.g., a mixture of IQ PBT/VALOX 195 and IQ PBT/VALOX 315).

### Methods of Making Powders of PBT-$Al_2O_3$ Composite Particles

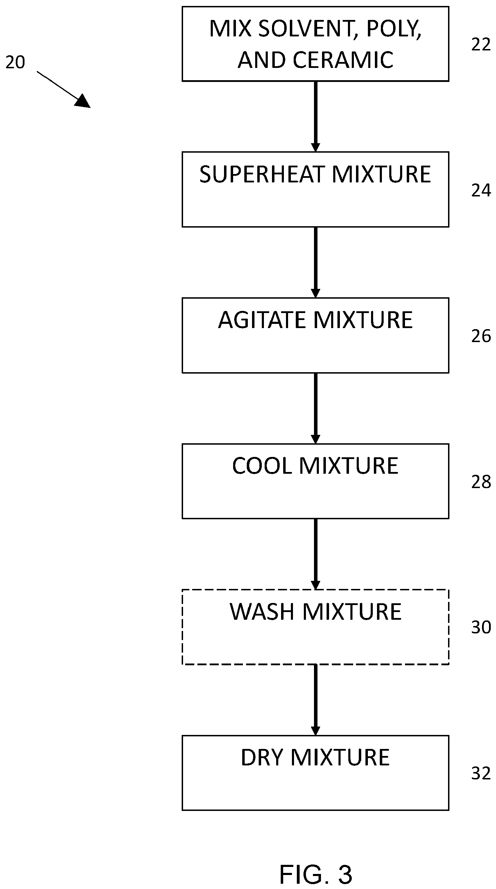

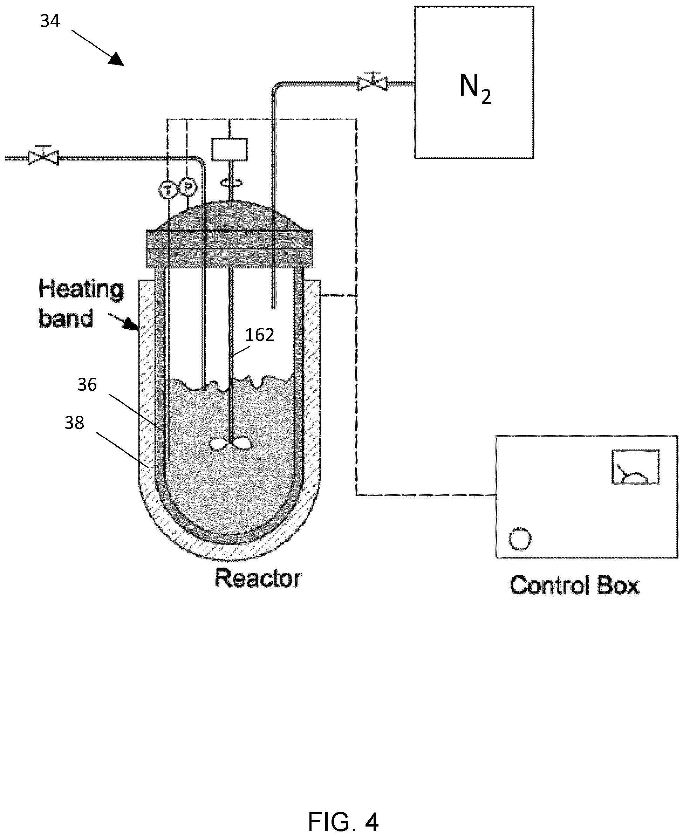

Referring now to Figures 3 and 4, Figure 3 depicts a flowchart 20 of one example of a method of making a powder of the present composite particles (e.g. 10a, 10b), and Figure 4 depicts a schematic illustration of stirring reactor 34 of a type (e.g., a PARR™ reactor or R-2004 reactor) that can be used to make a powder of the present composite particles.

First mixing the ceramic particles with the solvent can have certain benefits, for example, in reducing the agglomerating of ceramic particles. This benefit can be realized whether beginning with ceramic particles that are not agglomerated in their powder form, or with ceramic particles that are agglomerated in their powder form. For example, the $Al_2O_3$ powder (CL3000FG) used in the below-described examples was obtained from Almatis GmbH and, in its raw form prior to usage in the present methods, comprised fine ground alumina particles having an average particle size (D50) of 4.2 micrometers ($\mu$m), with particle sizes varying from 3.6 $\mu$m to 4.8 $\mu$m, and a surface area of from 0.75 to 1.20 $m^2$/g (typical 0.90 $m^2$/g). In some instances, mixing the ceramic particles with solvent prior to adding PBT particles can reduce agglomeration prior to mixing with PBT particles, and also resist reagglomeration of the ceramic particles during the subsequent mixing and bonding to the PBT.

At a step 22, PBT particles, solvent, and particles of ceramic are mixed together. The PBT particles, solvent, and ceramic may be mixed at the same time in a single vessel (e.g., directly in a shell or container 36 of a stirring reactor 34), or may be mixed sequentially. For example, the ceramic particles may first be mixed into a solvent (e.g., in a first vessel, such as a homogenizer), and the PBT particles may subsequently be mixed into the solvent-ceramic mixture (e.g., in the first vessel or in a second vessel, such as a shell or container 36 of stirring reactor 34). The solvent may comprise any solvent in which the PBT particles will partially dissolve under heated conditions, as described below. Other solvents that may be utilized in the present methods include those in which PBT is Freely Soluble or Soluble at elevated temperatures (e.g., above 75°C, above 100°C, about 150°C, and/or above 200°C), and Slightly Soluble or Sparingly Soluble at lower temperatures (e.g., below 50°C, such as at ambient temperatures), examples of which include relatively non-polar solvents with a boiling point above 100 °C (e.g., above 150 °C) such as: methoxybenzene, orthodichlorobenzene (ODCB), chlorobenzene, dichlorotoluene, 1,2,4-trichlorobenzene, diphenyl sulfone, monoalkoxybenzenes (e.g., anisole, veratrole, diphenylether, or phenetole), and other solvents in which PBT is Freely Soluble or Soluble at elevated temperatures (e.g., above 75°C, above 100°C, about 150°C, and/or above 200°C), and Slightly Soluble or Sparingly Soluble at lower temperatures (e.g., below 50°C, such as at ambient temperatures). As used in the preceding sentence, Freely Soluble requires 1 to 10 ml of solvent to dissolve 1 gram (g) of the PBT, Soluble requires 10 to 30 ml of solvent to dissolve 1 gram (g) of the PBT; Slightly Soluble requires 100 to 1000 ml of solvent to dissolve 1 gram (g) of the PBT; Sparingly Soluble requires 1000 to 10000 ml of solvent to dissolve 1 gram (g) of the PBT. Additional examples of solvents suitable for at least some implementations of the present methods include: polar aprotic solvents (e.g., dimethylformamide (DMF), dimethylacetamide (DMAc), dimethylsulfoxide (DMSO), sulfolane, and N-methylpyrrolidinone (NMP)); and ketones (e.g., cyclohexanone, cyclopentanone, methyl ethyl ketone, methyl ethyl ketone, methyl isobutyl ketone, and diisobutyl ketone).

At a step 24, the mixture of PBT particles, ceramic particles, and solvent is heated (e.g., via a heating element 38 of reactor 34) to partially dissolve the PBT in the solvent. In particular, the mixture is heated to a first temperature (e.g., at or below the normal the normal boiling point of the solvent) that exceeds the glass transition temperature of PBT, but is below the melting temperature of PBT, under a first pressure at which the solvent remains liquid. For example, when using ODCB as the solvent and a PBT with $T_m$ of 225°C, the mixture can be heated to 180°C under a pressure of 10 pounds per square inch (psi) or more (e.g., 70 psi). When using other solvents, the pressure may be kept at a different level (e.g., 100 psi).

At a step 26, which may be partially or entirely simultaneous with step 24, the mixture is agitated (e.g., via impeller 162 of reactor 34) for a period of minutes (e.g., equal to or greater than 1 minute, 5 minutes, 10 minutes, 20 minutes, 30 minutes, 40 minutes, 50 minutes, 60 minutes, or more) while the temperature of the mixture is substantially maintained at or above the first temperature, and the pressure to which the mixture is subjected is substantially maintained at or above the first pressure. In particular, the temperature and pressure are maintained during agitation to keep the mixture in a heated state.

At a step 28, the mixture is cooled to or below a second temperature that is below the glass transition temperature of PBT to cause (a) at least some of the PBT to precipitate and form PBT particles, (b) at least some of the PBT particles to agglomerate, and (c) at least some of the $Al_2O_3$ particles to bond to PBT particles, to thereby form a plurality of composite particles each comprising an agglomeration of polybutylene terephthalate (PBT) particle physically bonded to a plurality of aluminum oxide ($Al_2O_3$) particles, where at least some of the $Al_2O_3$ particles are exposed to an exterior of the agglomeration of PBT particles. For example, the mixture may be cooled to less than 55°C, less than 55°C, and/or to less than 35°C. Optionally, the mixture may continue to be agitated during this cooling step to resist agglomeration of the composite particles.

At an optional step 30, the formed composite particles may be washed or rinsed, either with the same solvent added in step 22 (e.g., ODCB) or with a different solvent (e.g, Methanol). For example, the wet solids cake can be removed from the vessel (e.g., shell or container 36 of reactor 34) and placed in a filter for rinsing.

At a step 32, the solids cake is dried to form a dry powder of the composite particles (e.g., 10), for example, at a temperature above the normal boiling point of the solvent added in step 22 and/or of the solvent used to wash/rinse the solids cake at optional step 30, optionally at a second pressure below ambient pressure (i.e., under vacuum). For example, when ODCB (normal boiling point of ~180°C) is added at step 22 and Methanol (normal boiling point of ~65°C) is used in step 30, the solids cake can be dried under vacuum at a temperature of 120°C for a period of time (e.g., 4 hours, 6, hours, 8 hours, 10 hours, 12 hours, 18 hours, or more).

## Methods of Molding Parts from PBT-Al$_2$O$_3$ Composite Particle Powders

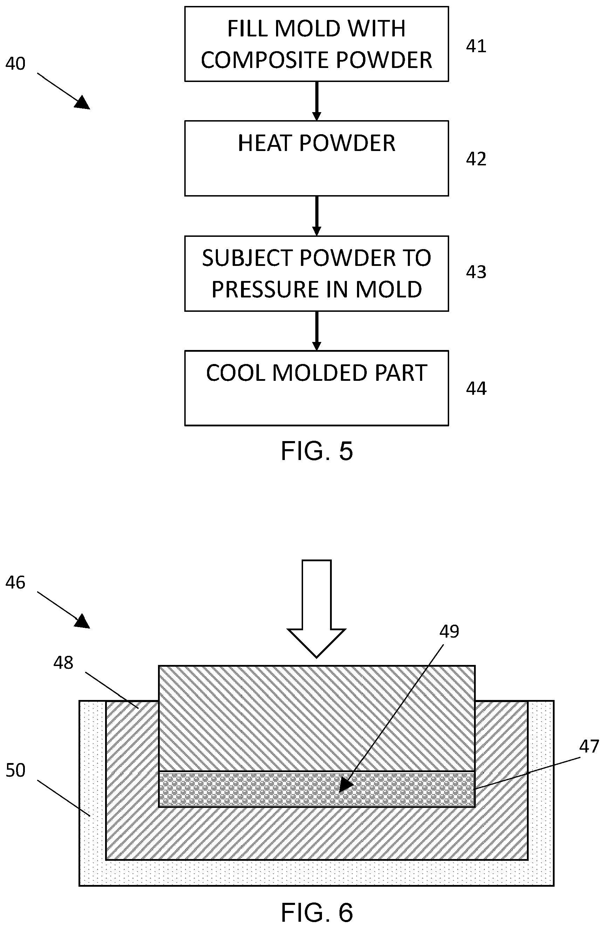

Referring now to Figures 5 and 6, Figure 5 depicts a flowchart 40 of one example of a method of molding a part from a powder of the present composite particles, and Figure 6 depicts a schematic illustration 250 of a compression mold for molding a part.

At a step 41, a working portion of a cavity 47 of a mold 48 is filled with a powder 49 of the present composite particles (e.g., 10).

At a step 42, the powder (49) is heated to at or above a first temperature (e.g., via a heating jacket 50) that exceeds (e.g., by at least 10°C, at least 20°C, at least 30°C, or more) a melting temperature (Tm) of the PBT. For example, the $T_m$ of IQ PBT 195 is ~195°C, the first temperature can be 225°C. Similarly, for a PBT with $T_m$ of 223°C, the first temperature can be 250°C.

At a step 43, which may be partially or entirely simultaneous with step 42, the powder is subjected to a first pressure (e.g., 370 Megapascals (MPa)) in the mold while the powder (e.g., and the mold) is held at or above the first temperature. The pressure may be maintained for a period of minutes (e.g., equal to or greater than 5 minutes, 10 minutes, 20 minutes, 30 minutes, 40 minutes, 50 minutes, 60 minutes, or more). In some implementations, the conditions (temperature, pressure, and/the like) and period of time for which the conditions are maintained are sufficient to result in a molded part with a relative density of greater than 90%.

## Examples

### 1. Example 1: 40:60 Powder of PBT-Al$_2$O$_3$ Composite Particles

**Materials:** 1642 grams (g) Alumina (Al$_2$O$_3$), 358 g PBT, 17.94 kg ODCB. The PBT was IQ PBT 195 particles from SABIC Thermoplastics, and the Alumina particles were CL3000FG Al$_2$O$_3$ particles from Almatis GmbH. Relative amounts of Alumina and PBT resulted in Alumina being about 60% by volume of the formed composite particles.

**Procedure:** The ODCB was added to an R-2004 reactor at room temperature and ambient pressure. The agitator of the R-2004 reactor was then activated at 100 rpm. With the agitator operating, the PBT was then added into the reactor through the sight glass opening by way of a funnel, and then the Alumina was subsequently also added into the reactor through the sight glass opening by way of the same funnel. A small portion (0.2 kg) of ODCB was then used to rinse the funnel into the sight glass opening to ensure all residue from the PBT (e.g., residual monomers) passes into the reactor chamber. A line from a nitrogen (N$_2$) source was then attached to the head-space port of the reactor shell, and the headspace in the shell purged several times with N$_2$. During the purging process, the pressure in the reactor shell was observed to ensure a tight seal. In particular, N$_2$ was added to pressurize the reactor chamber to 30 psig. As such, once the N$_2$ was added to the headspace, the N$_2$ source was turned off and all of valves on the PARR™ reactor were closed. When the pressure remained substantially constant (decrease of 1 psig or less) after about 15 minute(s), the pressure was released and the headspace purged with N$_2$ five total times, pressurizing the reactor chamber to 30 psig each time. If instead the pressure decreased, the pressure was released, the unit tightened again, and the process repeated until the pressure remained constant and the headspace could be thereafter purged five total times. After this purging process, N2 delivery to the headspace was maintained at a rate of 5 standard cubic feet per hour (scfh).

The reactor vessel was then heated and, once the temperature reached ~100°C, the three-way overhead valve was closed and the nitrogen purge discontinued. Heating continued until the vessel reached a target temperature of 180°C. The 80°C target temperature, and a pressure in the reactor chamber 10 psig, were maintained for a period of 30 minutes while agitation continued. After 30 minutes, the heater was turned off and the mixture allowed to cool to a temperature of approximately 30°C to ensure that all PBT had precipitated. Next, a Nutsche filter valve of the reactor was opened and N$_2$ delivered to the reactor chamber at 40 psig to direct the contents of the reactor to a Nutsche filter equipped with a 0.7 micron filter on top of a 20 micron filter. Once all reactor contents were transferred to the filtrate receiver of the Nutsche filter, pressure in the reactor chamber was relieved and the agitator turned offer. The sidewalls of the reactor were rinsed with approximately 2 kg of ODCB which was then transferred to the filter receiver.

The feed and vent valves for the filter were then closed, and the filter pressurized to 40 psig and the cake of composite PBT-Alumina particles allowed to dry until nitrogen was passing through the cake. Pressure was then vented from the Nutsche filter. The cake was then washed in the Nutsche filter with methanol at a pressure of 40 psig, after which pressure was relieved and the methanol removed, after which the cake was dried with nitrogen flow for a period of 30 minutes. The cake was then removed from the Nutsche filter, placed into an aluminum pan, and dried under vacuum (25-30 mm at 80°C for a period of 18 hours. Figure 7 depicts the formed 40:60 PBT-Alumina composite particles. Certain properties of the resulting dry powder of the 40:60 **PBT-Al$_2$O$_3$** composite particles were then measured and are included in Tables 1 and 2 below.

### 2. Example 2: 50:50 Powder of PBT-Al$_2$O$_3$ Composite Particles

**Materials:** 1508 grams (g) Alumina (Al$_2$O$_3$), 492 g PBT, 17.94 kg ODCB. Relative amounts of Alumina and PBT resulted in Alumina being about 50% by volume of the formed composite particles.
**Procedure:** The procedure for this Example 2 was substantially the same as that described above for Example 1. Figure 8 depicts the formed 50:50 PBT-Alumina composite particles. Certain properties of the resulting dry powder of the 50:50 PBT-Alumina particles were then measured and are included in Tables 1 and 2 below.

### 3. Example 3: 60:40 Powder of PBT-Al$_2$O$_3$ Composite Particles

**Materials:** 1342 grams (g) Alumina (Al$_2$O$_3$), 658 g PBT, 17.94 kg. Relative amounts of Alumina and PBT resulted in Alumina being about 40% by volume of the formed composite particles.
**Procedure:** The procedure for this Example 3 was substantially the same as that described above for Example 1. Figure 9 depicts the formed 60:40 PBT-Alumina composite particles. Certain properties of the resulting dry powder of the 60:40 PBT-Alumina particles were then measured and are included in Tables 1 and 2 below.

### 4. Example 4: Compression Molded Pellet of 40:60 PBT-Al$_2$O$_3$ Composite Particles

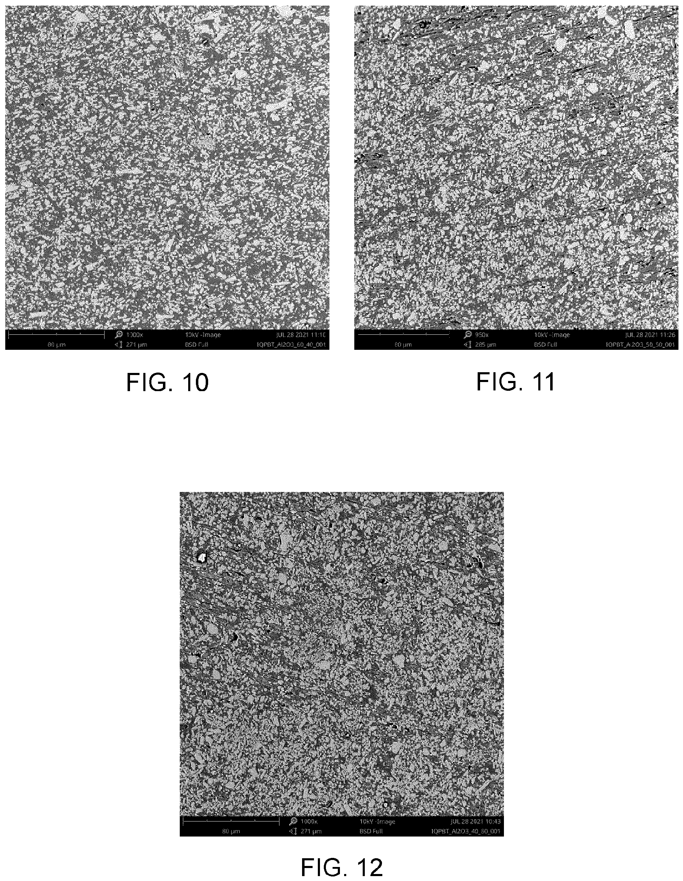

**Materials:** 1.2 g of a dry powder of 40:60 PBT-Al$_2$O$_3$ composite particles as produced in Example 1 described above.
**Procedure:** The powder was measured into an aluminum pan. Using a paper funnel, the powder was then poured into a circular cylindrical die of 13 millimeter (mm) internal diameter. The powder was then lightly compacted in the die using a rod, and a heating jacket was mounted around the die. The die was then heated to a first temperature of either 225°C, and maintained at the first temperature for five (5) minutes. A hydraulic press was then used to apply to the powder a pressure of 5 tons or 370 MPa. The mold was then held at the first temperature, with the powder under pressure, for a period of five (5) minutes, after which the heater was turned off and the die allowed to cool while the pressure was maintained. After a total of 30 minutes (beginning with the 5 minutes of uncompressed heating), the PBT-Alumina composite pellet was removed from the die, and the pellet weighed and its dimensions measured to calculate relative density. Figure 10 depicts the microstructure of the compressed pellet of this Example 4, and certain characteristics of the pellets are included in Table 3 below.

### 5. Example 5: Compression Molded Pellet of 50:50 PBT-Al$_2$O$_3$ Composite Particles

**Materials:** 1.2 g of a dry powder of 50:50 **PBT-Al$_2$O$_3$** composite particles as produced in Example 2 described above.
**Procedure:** The procedure for this Example 5 was substantially the same as that of Example 4. Figure 11 depicts the microstructure of the compressed pellet of this Example 5, and certain characteristics of the pellets are included in Table 3 below.

### 6. Example 6: Compression Molded Pellet of 60:40 PBT-Al$_2$O$_3$ Composite Particles

**Materials:** 1.2 g of a dry powder of 60:40 PBT-Al$_2$O$_3$ composite particles as produced in Example 3 described above.
**Procedure:** The procedure for this Example 6 was substantially the same as that of Example 4. Figure 12 depicts the microstructure of the compressed pellet of this Example 6, and certain characteristics of the pellets are included in Table 3 below.

### 7. Experimental Results

As explained above for certain Examples, various combinations of powders of composite particles were produced, and certain processing parameters and properties of the powders are listed in Table 1. The PBT reference powder, designated in Table 1 as "PBT Ref." was made via a process similar to that described above for Example 1, with the exception that ceramic particles were not included in the mixture, IQ PBT 195 particles (SABIC Thermoplastics) were included at 10% by volume of the ODCB solvent. Particle size was also measured for the Al$_2$O$_3$ powder (designated in Table 1 as "Al$_2$O$_3$").

**TABLE 1A: Powder Production - Process Parameters**

| Example | Polymer | Filler | Solvent | PARR Agitation (rpm) | Max Temp. C | Holding Time, min | Mass Polymer (g) | Mass Ceramic (g) | Polymer/ ceramic vol/vol |
|---|---|---|---|---|---|---|---|---|---|
| **PBT Ref.** | PBT | N/A | ODCB | 150 | 180 C | 30 | 10% solids | N/A | N/A |
| **1** | PBT | Alumina | ODCB | 150 | 180 C | 30 | 358 | 1642 | 40/60 |
| **2** | PBT | Alumina | ODCB | 150 | 180 C | 30 | 492 | 1508 | 50/50 |
| **3** | PBT | Alumina | ODCB | 150 | 180 C | 30 | 658 | 1342 | 60/40 |
| **Al$_2$O$_3$** | N/A | Alumina | N/A | N/A | N/A | N/A | N/A | 2000 | N/A |

**TABLE 1B: Powder Production - Unsieved Powder Parameters**

| Example | Polymer | Filler | Dv10 ($\mu$m) | Dv50 ($\mu$m) | Dv90 ($\mu$m) | Dv99 ($\mu$m) | Dv100 ($\mu$m) | Span |
|---|---|---|---|---|---|---|---|---|
| PBT Ref. | PBT | N/A | 50.5 | 118 | 521 | 904 | 977 | 3.986 |
| 1 | PBT | Alumina | 9.15 | 24.7 | 89.8 | 583 | 695 | 3.121 |
| 2 | PBT | Alumina | 19.7 | 151 | 692 | 943 | 976 | 4.683 |
| 3 | PBT | Alumina | 21.9 | 60 | 248 | 530 | 796 | 3.776 |
| $Al_2O_3$ | N/A | Alumina | 1.27 | 5.65 | 20.4 | 42.7 | 61.4 | 3.39 |

**TABLE 1C: Powder Production - Sieved Powder Parameters (150 $\mu$m mesh)**

| Example | Polymer | Filler | Dv10 ($\mu$m) | Dv50 ($\mu$m) | Dv90 ($\mu$m) | Dv99 ($\mu$m) | Dv100 ($\mu$m) | Span |
|---|---|---|---|---|---|---|---|---|
| PBT Ref. | PBT | N/A | 22.8 | 47 | 82.6 | 115 | 139 | 1.273 |
| 1 | PBT | Alumina | 3.27 | 14.7 | 32.6 | 130 | 250 | 1.987 |
| 2 | PBT | Alumina | 6.74 | 21.9 | 77.1 | 163 | 220 | 3.203 |
| 3 | PBT | Alumina | 8.06 | 23.8 | 54.7 | 136 | 220 | 1.958 |

**TABLE 1D: Powder Production via Heat-Cool Process - Powder Parameters**

| Example | Polymer | Filler | DSC Tm (°C) | DSC Tg (°C) | Exotherm (J/g) |
|---|---|---|---|---|---|
| PBT Ref. | PBT | N/A | 221.59 | 180.63 | 11.8 |
| 1 | PBT | Alumina | 220.29 | 181.24 | 16.16 |
| 2 | PBT | Alumina | 221.19 | 187.67 | 21.58 |
| 3 | PBT | Alumina | 223.6 | 189.58 | 71.78 |

Particle size values of the powders were measured with a commercial particle size analyzer (available from Malvern Panalytical Ltd. in Malvern, UK).

Morphology of the particles was also investigated using scanning electron microscopy. Figures 7, 8, and 9 respectively show 40:60, 50:50, and 60:40 PBT-Alumina particles; and Figures 10, 11, and 12 respectively show the microstructure of 40:60, 50:50, and 60:40 PBT-Alumina particles compression molded into a part. Alumina particles bonded to agglomerations of PBT particles, such that at least some of the alumina particles are exposed to the exteriors of the respective PBT agglomerations, is evident on the composite powders in Figures 7, 8, and 9. A thin layer of PBT is also evident between the ceramic grains in Figures 10, 11, and 12.

Thermogravimetric analysis (TGA) and molecular weight (measured via GPC) properties for the PBT-Alumina composite powder of Example 1, describe above, are summarized in Table 2. In addition, certain TGA and molecular weight properties were determined for the components of the respective composite powders). The density and molecular weight of the respective powders is given as comparative reference. No apparent degradation in molecular weight of the polymer was observed from the present heating-cooling methods of making composite particles.

**TABLE 2: Density, TGA, and Molecular Weight Data for Composite Powders**

| Example | Composition Filler | Composition Polymer | TGA Polymer (wt%) | Molecular Weight Mw (Da) | Molecular Weight Mn (Da) | Molecular Weight PD |
|---|---|---|---|---|---|---|
| PBT Ref. | PBT | N/A | 99.84 | 54353 | 26213 | 2.1 |
| 1 | PBT | Alumina | 17.98 | 55217 | 26040 | 2.1 |
| 2 | PBT | Alumina | 24.22 | 56656 | 26639 | 2.1 |

(continued)

| Example | Composition | | TGA | Molecular Weight | | |
| | Filler | Polymer | Polymer (wt%) | Mw (Da) | *Mn* (Da) | PD |
|---|---|---|---|---|---|---|
| **PBT Ref.** | PBT | N/A | 99.84 | 54353 | 26213 | 2.1 |
| **3** | PBT | Alumina | 32.07 | 56914 | 27016 | 2.1 |

TGA and molecular weight (measured via GPC) results on compression molded parts made from the present PBT-Alumina composite powders are summarized in Table 3. The density and molecular weight of the polymers parts molded at the same conditions as in Table 2 are given as comparative reference.

**TABLE 3A: Characteristics of Pellets of Composite Powders**

| Example | Composition | | Temp/Time/Pres | Density | Relative Density | Molecular Weight | | |
| | Filler | Polymer | (°C) / min / ton | (g/cc) | (%) | Mw (Da) | *Mn* (Da) | PD |
|---|---|---|---|---|---|---|---|---|
| **4** | $Al_2O_3$ | PBT | 225/30/5 | 2.86 | 98.8 | 49156 | 19959 | 2.5 |
| **5** | $Al_2O_3$ | PBT | 225/30/5 | 2.65 | 100.9 | 55235 | 24495 | 2.3 |
| **6** | $Al_2O_3$ | PBT | 225/30/5 | 2.41 | 102.1 | 53438 | 23966 | 2.2 |

**TABLE 3B: Characteristics of Pellets of Composite Powders**

| Example | Composition | | TGA | DSC | |
| | Filler | Polymer | Polymer (wt%) | Tm (°C) | Tg (°C) |
|---|---|---|---|---|---|
| **4** | $Al_2O_3$ | PBT | 17.78 | 220.29 | 181.24 |
| **5** | $Al_2O_3$ | PBT | 24.08 | 221.19 | 187.67 |
| **6** | $Al_2O_3$ | PBT | 32.27 | 223.6 | 189.58 |

Relative Density was determined by measuring the density of the molded pellet (Measured Density ($\rho_M$)) and comparing that to the Theoretical Density. The Measured Density may be calculated by dividing the volume, determined by measuring the outer dimensions (the volume of other shapes can be determined by any of various known methods, for example by submersion in an incompressible fluid), by the weighing the pellet (determined with a scale or balance). For the present examples, the Measured Density of the samples (e.g., pellets) was determined by the Archimedes method, using a KERN ABS-N/ABJ-NM balance equipped with an ACS-A03 density determination set. In particular, each sample was dried and the dry weight ($W_{dry}$) measured. The sample was then subjected to boiling in water for a period of 1 h to ensure that all voids in the object were filled with the water. The sample when then suspended in the used liquid at a known (non-boiling) temperature to determine the apparent mass in liquid ($W_{sus}$). The sample was then removed from the water, and the excess water wiped from the surface of the sample using a tissue moistened with the water. The saturated sample was then immediately weighed in air ($W_{sat}$). The density was then determined using Formula (2):

$$Density\ part = \frac{Wdry}{Wsat - Wsus} * density\ of\ water \qquad (2)$$

In the present examples, the quantities of polymer and ceramic in a pellet were known. When the starting proportions are not known, the organic content of the polymer in the compression-molded pellet can be determined by thermogravimetric analysis (TGA) in air, permitting the calculation of the content of ceramic in the compression-molded pellet. The combined density or Theoretical Density ($\rho_T$), assuming zero voids/gas content, was then calculated using Formula (3):

$$\rho_T = ((m_p \times \rho_p) + (m_c \times \rho_c)) / (m_p + m_c) \qquad (3)$$

where $m_p$ is the mass of the polymer in the molded pellet, $\rho_p$ is the density of the polymer, $m_c$ is the mass of the ceramic in the molded pellet, and $\rho_c$ is the density of the ceramic. Relative Density ($\rho_R$) is then calculated according to Formula (4):

$$\rho_R = \rho_M / \rho_T \times 100 \qquad\qquad (4)$$

The measurement of weight changes, programmed as isothermal or linear heating temperature conditions, can be monitored in solid or liquid specimen by the use of a Thermogravimetric Analyzer (TGA). The measurement of weight change, normally weight loss, can result from the degradation (thermal or oxidative) of the specimen, of by the evolution of volatiles below the degradation temperature of the sample. For the TGA measurements discussed herein, less than 50 mg of sample was weighed in a platinum pan, and the TGA test was conducted using a Discovery TGA at hearing rate of 20°C per minute in air.

Thermal analysis was performed by differential scanning calorimetry (DSC), a method of measuring heat flow as a function of temperature, as well as thermal transitions of samples (e.g., polymers, monomers, and additives) according to a predetermined time and temperature program. These thermal transitions are measured during heating, cooling, or isothermal cycles; and these transitions occur when the material undergoes a physical or chemical change. DSC was carried out on a TA-Q1000 Analyzer at 20 C/min.

The molecular weight measurements reported in Table 2 and Table 3 above, and in Table 4 below, were measured via liquid chromatography using an Agilent 1260 Infinity II HPLC (available from Agilent Technologies, Inc. (Santa Clara, CA, USA)) that comprised an Isocratic Pump, Vialsampler, multi-column thermostat (MCT) to regulate the mobile phase temperature passing through the columns, and a variable wavelength detector (VWD). The system was controlled by Agilent GPC/SEC software, and the measurements performed using known methods.

The measurement of weight changes, programmed as isothermal or linear heating temperature conditions, can be monitored in solid or liquid specimen by the use of a Thermogravimetric Analyzer (TGA). The measurement of weight change, normally weight loss, can result from the degradation (thermal or oxidative) of the specimen, of by the evolution of volatiles below the degradation temperature of the sample. For the TGA measurements discussed herein, less than 50mg of sample was weighed in a platinum pan, and the TGA test was conducted using a Discovery TGA at hearing rate of 20°C per minute in air.

Thermal analysis was performed by differential scanning calorimetry (DSC), a method of measuring heat flow as a function of temperature, as well as thermal transitions of samples (e.g., polymers, monomers, and additives) according to a predetermined time and temperature program. These thermal transitions are measured during heating, cooling, or isothermal cycles; and these transitions occur when the material undergoes a physical or chemical change. DSC was carried out on a TA-Q1000 Analyzer at 20 C/min.

Rectangular beams were also cut using a CNC mill from the 35 mm pellets produced above for Examples 4, 5, and 6, and certain mechanical properties determined. In particular, beams were cut to have a rectangular cross section of approximately 4 mm x 3 mm, and were polished using a 600 grit sand paper and tested under 3-point bending at a 1 mm per minute (mm/min) displacement rate. Table 4 summarizes the measured properties along with reference properties of $Al_2O_3$ alone obtained in literature.

**TABLE 4: Mechanical Properties of Compression Molded Parts**

| Example | Flexural Modulus (GPa) | Std. D | Flexural Strength (MPa) | Std. Dev. | Flexural Strain (mm/mm) | Flexural Strain (%) | Std. Dev. |
|---|---|---|---|---|---|---|---|
| 4 | 14.62 | 0.35 | 38.54 | 0.32 | 0.0038 | 0.38 | 0.014 |
| 5 | 12.78 | 0.83 | 44.90 | 1.14 | 0.0048 | 0.48 | 0.017 |
| 6 | 11.66 | 0.99 | 56.52 | 1.62 | 0.0060 | 0.60 | 0.039 |
| $Al_2O_3$ | 350-400 | | ~350 | | | | |

In addition to the mechanical properties reflected in Table 4 for Examples 4, 5, and 6, additional molded parts were formed using a similar process described above for Example 4, but starting with a dry mixture of the IQ PBT 195 PBT particles and the CL3000FG Alumina particles in similar 40:60, 50:50, and 60:40 volumetric ratios. In these comparative examples, the dry PBT particles were mechanically mixed with the dry Alumina particles for 6 minutes using a Harbil 5G Shaker. The resulting molded discs where then subjected to the same tests to measure flexural modulus, flexural strength, and flexural strain. The molded parts formed from the present composite powders exhibited predictable changes in mechanical properties between the 40:60, 50:50, and 60:40 PBT-Alumina volumetric ratios indicative of substantially homogenous distribution of PBT particles and Alumina particles. In contrast, the molded parts formed from dry mixed powders exhibited inconsistent mechanical properties between the 40:60, 50:50, and 60:40 PBT-Alumina volumetric ratios indicative of non-homogenous distribution of PBT particles and Alumina particles.

In addition to the mechanical properties listed in Table 4, dielectric constant (dk) and dissipation factor (df) were also measured at 100 MHz, 500 MHz, and 1 GHz on 35 mm disks with a thickness of less than 1.01 mm. Table 5 summarizes the measured properties along with reference properties of $Al_2O_3$ alone obtained in literature.

Dielectric permittivity (Dk) and loss tangent or dissipation factor (Df) at different frequencies were determined using the parallel plate configuration defined in the ASTM D150 standard or IPC 2.5.5.9 standard, and split-post dielectric resonator (SPDR), utilizing the test method provided in IEC (International Electrotechnical Commission) Standard 61189-2-721 (Ed. 1.0 b:2015). In particular, parallel plate measurements at 1 MHz (ASTM D150) were facilitated by a 16541B test fixture and E4980AL LCR meter (Keysight). The experimental setup included a network analyzer (Agilent Technologies E5071C) connected to the SPDR fixture of choice.

Reported Dk and Df values are the average of 5 measurements with the sample reinserted for each measurement. Test samples were pre-conditioned at room temperature in 50% relative humidity for 24 hours prior to measurements. All sample fixtures were calibrated both in air (empty state) and with a polytetrafluoroethylene (PTFE, kept in 50% humidity environment) control prior to each set of trials. All experiments were conducted at room temperature.

**Table 5. Dielectric constant (dk) and dissipation factor (df)**

| Example | 100 MHz | | 500 MHz | | 1 GHz | |
|---|---|---|---|---|---|---|
| | Dk | Df | Dk | Df | Dk | Df |
| 4 | 6.18 | 0.0054 | 6.16 | 0.0037 | 6.18 | 0.0036 |
| 5 | 5.61 | 0.0057 | 5.57 | 0.0044 | 5.57 | 0.0043 |
| 6 | 4.98 | 0.0073 | 4.95 | 0.0054 | 4.96 | 0.0051 |

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this disclosure. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiments. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments. Accordingly, no single implementation described herein should be construed as limiting and implementations of the disclosure may be suitably combined without departing from the teachings of the disclosure.

The claims are not intended to include, and should not be interpreted to include, means plus- or step-plus-function limitations, unless such a limitation is explicitly recited in a given claim using the phrase(s) "means for" or "step for," respectively.

**Claims**

1. A ceramic-polymer composite powder, the powder comprising:

   a plurality of composite particles, each of the composite particles comprising an agglomeration of polybutylene terephthalate (PBT) particles physically bonded to a plurality of aluminum oxide ($Al_2O_3$) particles, where at least some of the $Al_2O_3$ particles are exposed to an exterior of the agglomeration of PBT particles;
   where the powder comprises between 50% and 90% by volume of $Al_2O_3$, and between 10% and 50% by volume of PBT;
   where the composite particles have a Dv50 of from 1 micrometer ($\mu$m) to 200 $\mu$m; and
   where substantially all of the PBT is not cross-linked; and
   where the composite particles are in powder form.

2. The powder of claim 1, where the composite particles comprise between 50% and 70% by volume of the ceramic.

3. The powder of any of claims 1-2, where the powder has a solvent content of less than 3000 parts per million (ppm).

4. The powder of any of claims 1-3, where the composite particles have a Dv50 of from 10 $\mu$m to 30 $\mu$m.

5. The powder of any of claims 1-4, where the Al$_2$O$_3$ particle(s) have a Dv50 of from 1 $\mu$m to 10 $\mu$m.

6. The powder of any of claims 1-5, where the PBT particles are distinctly identifiable.

7. The powder of any of claims 1-6, where the powder comprises less than 5% by weight of free PBT particles that are not directly or indirectly bonded to one of the Al$_2$O$_3$ particles.

8. The powder of any of claims 1-7, where the powder exhibits a flowability *ffc* of from 1 to 4, optionally from 2 to 4.

9. A ceramic-polymer composite material in pellet form, the material comprising:

   a plurality of solid pellets each comprising a plurality of composite particles, where each of the composite particles comprises an agglomeration of polybutylene terephthalate (PBT) particles physically bonded to a plurality of aluminum oxide (Al$_2$O$_3$) particles, where at least some of the Al$_2$O$_3$ particles are exposed to an exterior of the agglomeration of PBT particles;
   where the pellets comprise between 50% and 90% by volume of Al$_2$O$_3$, and between 10% and 50% by volume of PBT;
   where substantially all of the PBT is not cross-linked; and
   where some of the PBT particles of adjacent composite particles are physically bonded to resist separation of the adjacent composite particles and deformation of a respective pellet.

10. A method of forming a ceramic-polymer composite powder, the method comprising:

    mixing polybutylene terephthalate (PBT) particles, organic solvent, and aluminum oxide (Al$_2$O$_3$) particles;
    at least partially dissolving the PBT particles in the solvent by heating the mixture to a first temperature that is between the glass transition temperature and the melting point of the PBT, while maintaining the mixture at a first pressure at which the solvent remains substantially liquid;
    agitating the heated mixture for a period of minutes while maintaining the mixture at or above the first pressure and at or above the first temperature but below the melting point of the PBT; and
    cooling the mixture to or below a second temperature below the glass transition temperature of PBT to cause (a) at least some of the PBT to precipitate and form PBT particles, (b) at least some of the PBT particles to agglomerate, and (c) at least some of the Al$_2$O$_3$ particles to bond to PBT particles, to thereby form a plurality of composite particles each comprising an agglomeration of polybutylene terephthalate (PBT) particle physically bonded to a plurality of aluminum oxide (Al$_2$O$_3$) particles, where at least some of the Al$_2$O$_3$ particles are exposed to an exterior of the agglomeration of PBT particles.

11. The method of claim 10, where the mixing step comprises:

    mixing the solvent and the Al$_2$O$_3$ particles;
    agitating the mixture of the solvent and the Al$_2$O$_3$ particles de-agglomerate the Al$_2$O$_3$ particles;
    mixing the PBT into the agitated mixture of the solvent and the Al$_2$O$_3$ particles.

12. The method of any of claims 10-11, further comprising one or more steps selected from the group of steps consisting of:

    agitating the mixture during the cooling step;
    filtering the mixture after the cooling step to obtain wet composite particles;
    washing the composite particles after the filtering step; and
    drying the composite particles at a temperature above the glass transition temperature of the PBT.

13. The method of any of claims 10-12, where the solvent comprises a solvent selected from the group of solvents consisting of: cyclohexanone, orthodichlorobenzene (ODCB), and methoxybenzene.

14. A method comprising:

subjecting, for a period of minutes, a powder of any of claims 1-8 or a plurality of pellets of claim 9 to a first pressure while the powder is at a first temperature that is above the melting point of the PBT;
where the powder substantially fills a working portion of a cavity of a mold.

15. The method of claim 14 , where the first pressure is sufficient to form a molded part with a relative density greater than 90%, and optionally greater than 97%, after the first pressure has been applied to the powder for a period of at least 30 minutes.

18b

14a

18a

18a

18a

10a

18a

18a

FIG. 1A

18a

18a    18a    18a

18a    18a

14b

14b

14b

10b

14b

FIG. 1B

14        14

14        14

14

14

14

14        14

14

14

14

FIG. 2

20

```
┌─────────────────────┐
│   MIX SOLVENT, POLY, │  22
│    AND CERAMIC       │
└─────────────────────┘
          │
          ▼
┌─────────────────────┐
│  SUPERHEAT MIXTURE   │  24
└─────────────────────┘
          │
          ▼
┌─────────────────────┐
│   AGITATE MIXTURE    │  26
└─────────────────────┘
          │
          ▼
┌─────────────────────┐
│    COOL MIXTURE      │  28
└─────────────────────┘
          │
          ▼
┌ ─ ─ ─ ─ ─ ─ ─ ─ ─ ─ ┐
    WASH MIXTURE          30
└ ─ ─ ─ ─ ─ ─ ─ ─ ─ ─ ┘
          │
          ▼
┌─────────────────────┐
│    DRY MIXTURE       │  32
└─────────────────────┘
```

FIG. 3

34

N$_2$

Heating
band

162

36

38

Reactor

Control Box

FIG. 4

40

```
┌─────────────────────────┐
│   FILL MOLD WITH        │  41
│   COMPOSITE POWDER      │
└─────────────────────────┘
            │
            ▼
┌─────────────────────────┐
│   HEAT POWDER           │  42
│                         │
└─────────────────────────┘
            │
            ▼
┌─────────────────────────┐
│   SUBJECT POWDER TO     │  43
│   PRESSURE IN MOLD      │
└─────────────────────────┘
            │
            ▼
┌─────────────────────────┐
│   COOL MOLDED PART      │  44
│                         │
└─────────────────────────┘
```

FIG. 5

46

48

49

47

50

FIG. 6

FIG. 7

FIG. 8

FIG. 9

FIG. 10

FIG. 11

FIG. 12

EUROPEAN SEARCH REPORT

Application Number

EP 22 15 4749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/059218 A2 (SHPP GLOBAL TECH BV [NL]) 1 April 2021 (2021-04-01) | 14,15 | INV. C08J3/12 |
| A | * paragraphs [0008], [0010], [0013], [0040], [0041], [0058], [0064] – [0075]; claims; figures 1-6 * | 1-13 | |

TECHNICAL FIELDS SEARCHED (IPC)

C08J
B29B

The present search report has been drawn up for all claims

| Place of search | Date of completion of the search | Examiner |
|---|---|---|
| Munich | 7 July 2022 | Pamies Olle, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                       
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 4749

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2022

| Patent document cited in search report | | Publication date | Patent family member(s) | Publication date |
|---|---|---|---|---|
| WO 2021059218 | A2 | 01-04-2021 | EP 3797862 A1 | 31-03-2021 |
| | | | KR 20220069100 A | 26-05-2022 |
| | | | WO 2021059218 A2 | 01-04-2021 |

EPO FORM P0459

For more details about this annex : see Official Journal of the European Patent Office, No. 12/82

**REFERENCES CITED IN THE DESCRIPTION**

**Patent documents cited in the description**

- US 20170088471 A
- WO 2018039620 A
- WO 2018039628 A
- WO 2018039619 A
- WO 2018039634 A

**Non-patent literature cited in the description**

- **WOLFF.** *Composites Science and Technology,* 2014, vol. 90, 154-159